# NEW EUROPEAN PATENT SPECIFICATION

(11) **EP 0 680 641 B2**
(45) Date of publication and mention of the opposition decision: **27.09.2006**
(45) Mention of the grant of the patent: 24.11.1999
(21) Application number: 93907045.4
(22) Date of filing: 25.02.1993
(51) Int. Cl.: G06K 7/10

(54) **OPTICAL SCANNING HEAD**
OPTISCHER ABTASTKOPF
TETE DE BALAYAGE OPTIQUE

(30) Priority: 02.10.1992 US 956646; 23.10.1992 US 965991
(43) Date of publication of application: 08.11.1995
(73) Proprietor: SYMBOL TECHNOLOGIES, INC., Holtsville, NY 11742 (US)
(72) Inventor: Roustaei, Alex, San Marcos, CA 92069 (UA)
(74) Representative: Wardle, Callum Tarn
(86) International application number: PCT/US1993/001706
(87) International publication number: WO 1993/017397

(56) References cited:
- EP-A- 0 101 939
- EP-A- 0 101 939
- EP-A- 0 152 733
- EP-A- 0 164 012
- EP-A- 0 249 713
- EP-A- 0 384 955
- EP-A- 0 517 956
- EP-A- 0 524 653
- GB-A- 2 225 659
- GB-A- 2 225 659
- US-A- 4 315 245
- US-A- 4 570 057
- US-A- 4 743 773
- US-A- 4 804 949
- US-A- 5 010 241
- US-A- 5 038 258
- US-A- 5 083 246
- US-A- 5 135 160
- Webster's Third New International Dictionary of the English Language Unabridged. Merriam-Webster Inc., Springfield, Massachusetts, USA, 1993
- Operator's Manual of DATALOGIC bar code readers DL60-00/01, dated May 1990.
- Technical drawing No. V2027 dated 03.02.1989 showing internal features of DATALOGIC bar code reader DL60
- Invoice No. 202 dated 29.03.1991 concerning the sale of bar code reader DL60-01 to DATALOGIC, Inc. California, US
- Invoice No. 214 dated 08.04.1991 concerning the sale of bar code reader DL60-01 to CMC (Portugal) S.A.R.L.

## Description

### FIELD OF THE INVENTION

The invention generally relates to a scanning system for reading and/or analyzing bar code symbols and more particularly, to a portable bar code scanner.

### BACKGROUND OF THE INVENTION

Many industries, including the assembly processing, grocery and food processing industries, utilize an identification system in which the products are marked with a bar code symbol consisting of a series of lines and spaces of varying widths. A number of different bar code readers and laser scanning systems have been developed to decode the symbol pattern to a multiple digit representation for inventory, production tracking, and for check out or sales purposes. Optical scanners are available in a variety of configurations, some of which are built into a fixed scanning station and others of which are portable. The portability of an optical scanning head provides a number of advantages, including the ability to inventory products on shelves and to track portable items such as files or small equipment. A number of these portable scanning heads incorporate laser diodes which permit the user to scan the bar code symbols at variable distances from the surface on which the bar code is imprinted. A disadvantage of laser scanners is that they are expensive to manufacture. Another type of bar code scanner which can be incorporated into a portable system uses light emitting diodes (LED) as a light source and charge couple devices (CCD) as detectors. This class of bar code scanners is generally known a "CCD scanners ". While CCD scanners have the advantage of being less expensive to manufacture, they limit the user to scanning the bar code by either contacting the surface on which the bar code is imprinted or maintaining a distance of no more than one and one-half inches away from the bar code, which creates a further limitation in that it cannot read a bar code any longer than the window or housing width of the scanning head. Thus, the CCD scanner does not provide the comfort or versatility of the laser scanner which permits variable distance scanning of bar code symbols which may be wider than the window or housing width.

Recently, considerable attention has been directed toward two-dimensional bar codes, which can store about 100 times more information in the same space occupied by a one-dimensional bar code. In two-dimensional bar coding, rows of lines and spaces are stacked upon each other. The codes are read by scanning a laser across each -row in succession in a zig-zag pattern. This scanning technique introduces the risk of loss of vertical synchrony. It also has the disadvantage of requiring a laser for illumination of the bar code, which makes the scanner more expensive.

A public prior use corresponding to the operators manual of Datalogic DL 66-00/01 no B8250002 printed May 1990 discloses a similar optical scanner providing an array of a plurality of parallel LEDs behind a single lens.

US Patent No. 4315245 relates to an optical information reading device having an array of luminous diodes. A sensor' transmits received data signals to a pattern identification circuit. The signals are also transmitted to a light control circuit to vary the illumination to the array to provide uniform lighting of the characters to be read.

US Patent No. 4818886 relates to a method and apparatus for self referencing and self focusing a bar code reader. The apparatus uses a plurality of LED's disposed at various distances from a lens to provide a radiation that is either substantially in focus or out of focus on the bar code surface. A full reading requires a relative scan motion under manual or mechanical control to traverse the bar code pattern.

US Patent no. 4 743 773 shows a bar code scanner comprising a linear array or arrays of spot light sources. The linear array is comprised of multiple parallel spot light sources.

GB 2 225 659 shows an optical bar code reader in which an LED has a lens or lenses arranged in front thereof in order to produce a uniform illumination of a strip-shaped region in which a bar code is placed in order to be read.

### SUMMARY OF THE INVENTION

It is an advantage of the present invention to provide an optical scanning head for reading bar code symbols at variable distances from the symbol which uses LED light sources and CCD detectors.

In accordance with the invention there is provided an optical scanner in accordance with claim 1.

In an exemplary embodiment, the optical scanning head comprises a plurality of light emitting diodes arranged in close proximity to each other with each of the LEDs being oriented to emit light at different angles so that a fan of light is created. Generally, LEDs are also oriented so that all LEDs are directed at some non-zero angle from a line perpendicular to the window through which the light is emitted. The number of LEDs can be varied depending on the intensity of light desired and the application. For example, a scan of a two-dimensional bar code will require more LEDs, generally in a double light arrangement, while a one-dimensional bar code needs only one row. A single scanning head can be made with the ability to select one-or two-dimensional scanning by including a trigger or other switching means which activates the appropriate number of LEDs. The LEDs can be arranged in a number of different groupings, such as in a "V"- or "U"-shape, or in single or parallel lines. In an alternate embodiment, not in accordance with the invention as claimed, the LED array can be replaced with a flash lamp, which provides more intense light for scanning at greater distances.

An optical module includes a light shield or "dark room" and a lens/filter assembly which provides control of the depth of focus of the scanner. The optical module is located behind the light source, and the detector, made up of a CCD array is mounted behind the optic module for detecting the light intensity in the reflected beam over a field of view across a bar code symbol. The CCD array may consist of a single linear arrangement, a double linear arrangement, or a matrix arrangement. The CCD array generates an electrical signal indicative of the detected light intensity. This signal is conveyed to a signal converter consisting of an analog filter and analog-to-digital conversion circuitry to filter noise and digitize the analog signal to generate data descriptive of the bar code symbol. Gain control, which may or may not be automatic, edge detection or highly adaptive thresholding is provided to adjust the magnitude of the received signal to a pre-determined level, regardless of the distance between the bar code and the scanner and the ambient illumination. Each of these techniques look, in effect, at the slope of the waveform produced when a bar code is scanned (while the ideal signal would be a set of rectangular pulses, the real signal has a rounded form because of the convolution distortion).

A light transmissive window is positioned in front of the LEDs for manipulating and focussing the light. The window may include a filter and/or anti-reflection coating. The window may be configured to have a double radius for focussing at two different focal distances, and may be "knurled" or scalloped to homogenize the light. For optimum efficiency, the window is located at a distance in front of the LEDs coinciding with the greatest concentration of light.

The optical scanning head is powered by a D.C. source or battery, preferably rechargeable, which provides DC voltage to the LEDs and CCDs in response to a clocked signal which is provided by a drive clock sequencer and synchronization module. The timing signal can control a gradual, serial illumination of the LEDs and coordinates the activation of the CCDs in order to minimize power consumption during scans. Alternatively, the voltage supplied to the LEDs can be modulated in response to the level of the signal produced by the CCDs. If a bar code is scanned at close range, a lower level of light will provide a strong signal. However, at greater distances from the bar code, higher light intensity is necessary to achieve a good quality signal at the CCDs. Power is conserved in the latter version by not providing full power to the LEDs unless necessary.

The timing signal may also be used to control an optional electronic shutter which periodically closes to create "snapshots" of the bar code. This preserves the integrity of the bar code pattern signal while the scanner or the bar code is in motion.

### BRIEF DESCRIPTION OF THE DRAWINGS

Understanding of the present invention will be facilitated by consideration of the following detailed description of a preferred embodiment of the present invention, taken in conjunction with the accompanying drawings, in which like reference numerals refer to like parts and in which:
Figure 1 is a diagrammatic view of the relative layout of the LEDs, optical module, and detector on a printed circuit board;
Figures 2a, 2b and 2c are diagrammatic views of relative locations of LEDs for one trio, two trios and three trios of LEDs, respectively;
Figure 3 is an exploded view of the lens assembly;
Figure 4 is a perspective view of an assembled optical scanning head including a housing;
Figure 5 is a cross-sectional view along line 5-5 of Figure 4;
Figure 6 is a circuit diagram of the LED board for the 12 LED configuration of Figure 1;
Figures 7a through 7g are plots of clock pulses for different timing configurations with respect to activation of the scanner (Figure 7a); alternate illumination cycles (Figures 7b, 7c and 7d) according to the present invention; analog reset of the detector (Figure 7e); and illumination patterns according to prior art methods 1 and 2 (Figures 7f and 7g);
Figure 8 is a block diagram of the operational sequence of the optical scanning head according to the present invention;
Figure 9 is a diagrammatic view of an alternate LED layout and the corresponding light distribution;
Figure 10 is a diagrammatic view of a second alternate LED layout and its corresponding light distribution;
Figure 11 is a diagrammatic view of a third alternate LED layout and its corresponding light distribution;
Figure 12 is a block diagram of the scanning device;
Figure 13a and 13b are front views of air slits for one-dimensional and two-dimensional applications, respectively;
Figures 14a and 14b are diagrammatic views of a knurled cylindrical lens with a concave and convex output edge, respectively;
Figure 15 is a diagrammatic view of a double radius cylindrical lens;
Figure 16 is a block diagram of the CCD module;
Figure 17 is a side elevation, partially cut away, of the invention utilizing the double radius cylindrical lens;
Figures 18a through 18f are diagrammatic views of LED orientation for two-dimensional scanning, Figure 18a showing parallel, and Figure 18b perpendicular, to the front of the printed circuit board, Figure 18c shows a two-tiered arrangement of the LEDs, Figure 18d shows two vertical rows of LEDs, Figure 18e and 18f show a combination horizontal and vertical arrangements;
Figure 19 is a diagrammatic view of a single light source with a parabolic reflector which does not form part of the invention ;

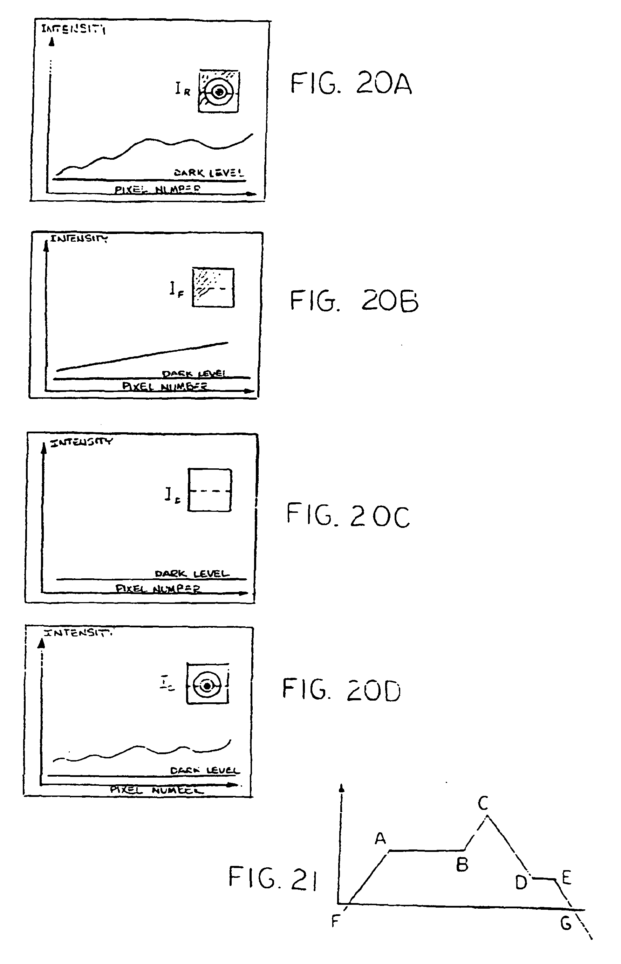

Figures 20a through 20d are plots of intensity with pixel number for an actual image (20a), a dark frame (20b), a flat field (20c) and a corrected image (20d); and
Figure 21 is a plot of a filter transfer function.

### DETAILED DESCRIPTION OF THE PREFERRED EMBODIMENT

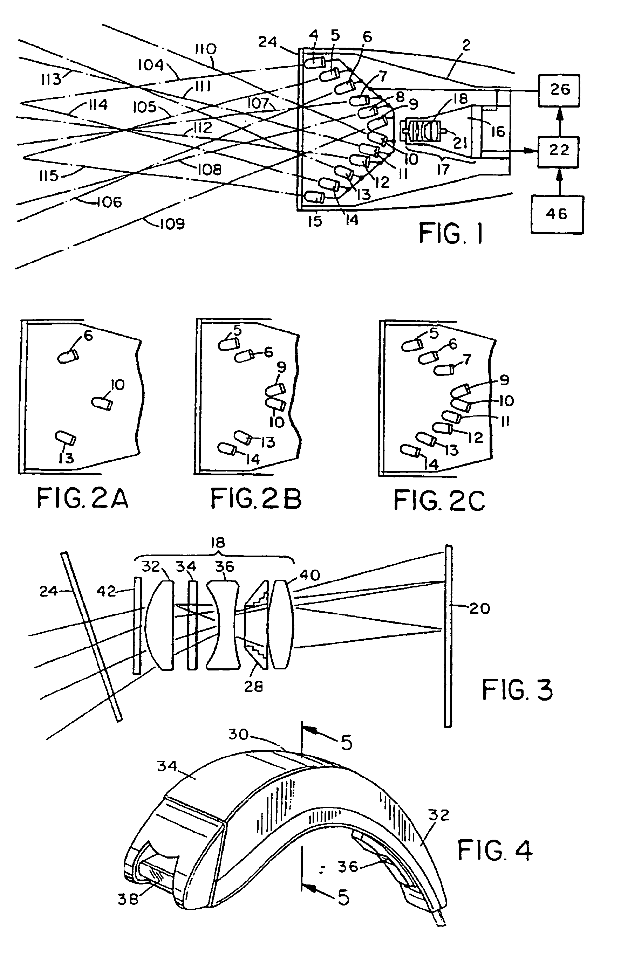

The scanning head module illustrated in Figure 1 comprises the printed circuit board (PCB) 2 configured as a generally "U"- or "Y"-shaped surface onto which is mounted a plurality of LEDs (from 3 to 24 individual LEDs) configured in a "V"-shaped, "U"-shaped, or linear pattern in an orientation that results in projection of a light ray by one LED in a direction distinct from other LEDs in the trio. The configuration illustrated in Figure 1 has 12 LEDs mounted on the PCB 2 in a "V"-shape. These are identified as LEDs 4 through 15, which emanate rays of light 104 through 115. The portion of printed circuit board 2 from which LED light emanates will be considered the front of the board. A line of reference for describing the orientation angles of the LEDs runs perpendicular to the front of the PCB 2. At the approximate center of board, behind the LEDs, an optical module 17 consisting of a light shield (dark room 16), in which is contained lens assembly 18 which filters and focuses light reflected from a scanned bar code onto CCD detector 20, disposed behind the optical module at the rear of PCB 2. A signal generated by activation of the CCDs by the reflected light is conveyed to signal converter 22, for the one-dimensional scanner, which consists of an analog filter and an analog-to-digital circuit, or by signal converter 22' for the two-dimensional scanner. Forward of the LEDs, either attached to the PCB 2 or mounted within a housing containing PCB 2, is window 24 which is light transmissive and provides filtering, focusing and positioning of the light path of the illuminating beam incident upon the bar code to be scanned. The reflected light carrying the intensity modulated bar code signal is directed back to the lens assembly and to the detector.

The scanning head may also include a decoder module 26 which decodes a multiple-digit representation of bar code symbols such as UPC, EAN, JAN, Code 39, Code 2/5I, Code 2/5, Code 128, Codabar, Plessey, and other bar code systems. In the two-dimensional bar code reader, a memory buffer 88, shown in Figure 12, will store the two-dimensional image prior to decoding by decoder module 26.

The first embodiment of the light source illustrated in Figure 1 consists of 12 LEDs which are mounted in a generally V-shaped configuration relative to other LEDs so that they point outward at angles such that groupings of three on a single leg, e.g. LEDs 4, 5 and 6 or 13, 14 and 15 form substantially a single beam of light which expands at increased field depth. The actual grouping of the LEDs is best illustrated in Figures 2a, b and c. Here, the 12 LEDs are divided into groups of three, or trios, of LEDs. From this it can be seen that a given trio of LEDs is not determined by serial progression of the LED's location in the V-configuration, but rather that the combined illumination of the trio substantially fills the window 24 and expands therefrom to form a fan of light to facilitate detection of bar codes which are wider than the window itself.

In Figure 2a, LEDs 6,10 and 13 make up the first trio. Light rays 106, 110 and 113, shown in Figure 1, fill a substantial portion of the window 24. The second trio of LEDs comprises LED 5, LED 10 and LED 14, which are added to the first trio, as shown in Figure 2b. The beams emanating therefrom, rays 105, 110 and 114, shown in Figure 1, supplement rays from the first trio to fill window 24 and expand therefrom. Figure 2c illustrates the location of the third trio consisting of LEDs 7, 11 and 12. Rays 107, 111 and 112 emanate therefrom to supplement the light from the first two trios. The fourth trio is made up of LEDs 4, 8 and 15 with their respective rays 104, 108 and 115. The specific LEDs included within a given trio are variable as long as the resultant fan of light substantially fills the window 24. As will be described below, the designated grouping of LEDs, whether in a trio or some other member greater than 2, may be sequentially illuminated in order to conserve the energy of the power source. For example, the configuration having twelve LEDs can also be divided into two sextets or three quartets. Similarly, if 24 LEDs are used, the groupings can consist of three, four, six, eight, or twelve LEDs. The grouping of the LEDs is significant when sequential or graduated illumination is used.

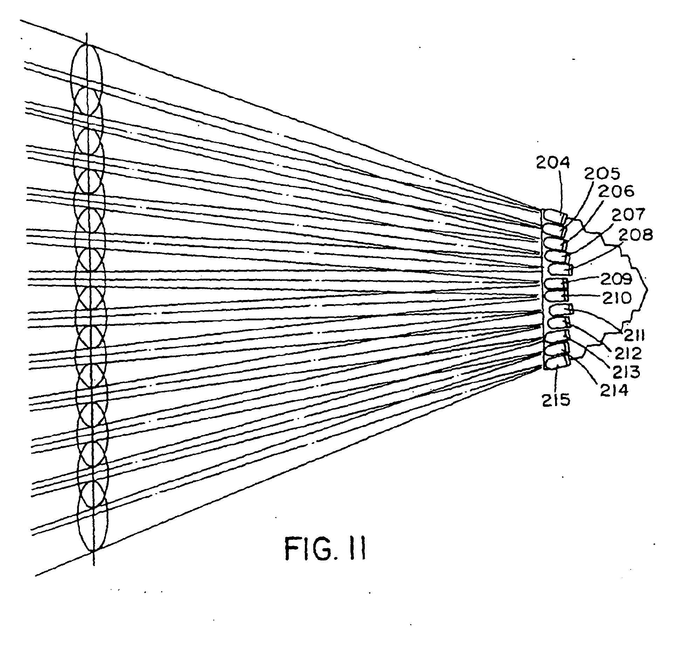

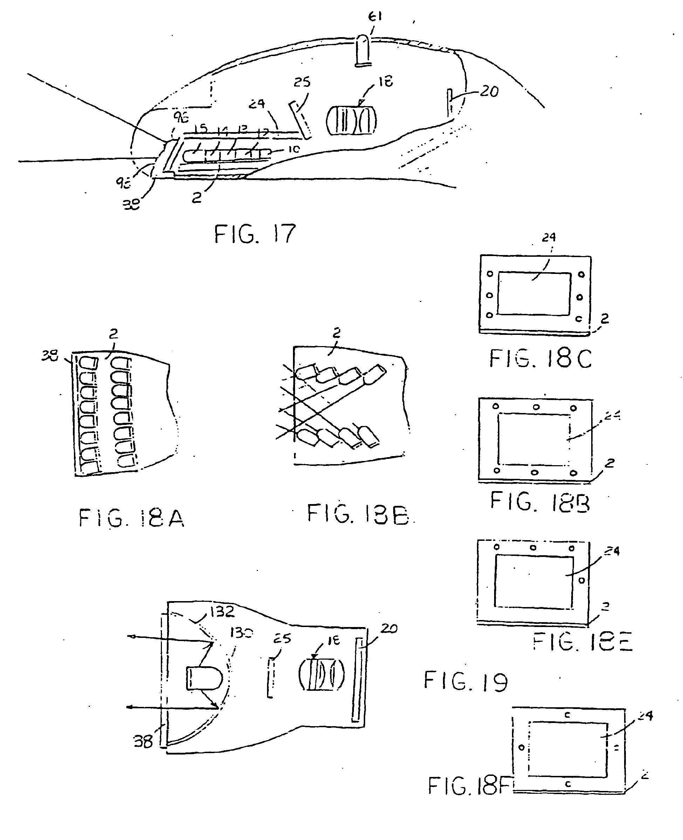

Alternate configurations for arrangement of the LEDs can be a "U"-shape or a generally straight line across the front of the board, as illustrated in Figure 11. For two-dimensional bar code scanning, the variations can include two linear rows of LEDs, parallel to the front of the PCB 2, or two linear rows of LEDs perpendicular to the front of the board, as illustrated in Figures 18a and 18b, respectively. Combinations of parallel and perpendicular rows may also be used. A multi-tiered arrangement can also be used for positioning of the LEDs, with, for example, one row above another, as in Figure 18c, or with two vertical rows extending upward from PCB 2, as in Figure 18d, or any combination thereof. In Figure 18e, a possible combination consists of one row of LEDs running across the upper row, and a single LED on one side, and in Figure 18f, a single LED is located on each of four sides in a vertical plane. In each case, the fan of light is created by orienting the LEDs at different angles. In the straight line configuration of Figure 11, the centermost LEDs 209 and 210, are turned to point away at an angle of 1.625 degrees from a line normal to the front of the board. Progressing outward, each LED is 3.25 degrees from its inner adjacent LED.

The LEDs are selected so that they emit light at the wavelength of 660 nanometer, red light within the visible spectrum. This wavelength provides optimal contrast for bar code scanning applications in which dark and light bars must be distinguished. Infrared light also provides enhanced contrast, so that LEDs emitting light outside of the visible spectrum may be used.

An alternate light source not in accordance with the invention is a flash lamp 130 or any other intense light source, illustrated in Figure 19. Flash lamps are available to emit light at a number of different wavelengths. The wavelength at which the selected flash lamp emits light will be determined by the color of the bar code and its background, so that the best possible contrast is obtained. A parabolic reflector 132 is included within the optical scanning head assembly with the flash lamp 130 at its center. This allows the maximum amount of light to be directed forward for illumination of the bar code. The higher intensity light will permit scanning at distances greater than 35 inches.

The optic module 17 consists of three lenses mounted inside a slidable lens support 30, all of which are retained within dark room 16. The selection of the three lenses of which the lens assembly 18 is formed depends upon the desired reference plane, i.e., the desired depth of field, which is the distance between the detector 20 and the bar code being scanned, so the reflected light is appropriately focused on the detector array. The lens assembly 18 consists of a plano-convex lens 32 followed by a bandpass filter 34, a biconcave lens 36 followed by an optical diffuser 28 and a focussing and receiving singlet lens 40. Lens 40 is important to the success of the invention since it determines the beam diameter impinging upon the detector array, and concentrates the beam to provide the maximum available light at the detector. In a two-dimensional scanner, the image is focussed on the detector array, without distortion, by a plano-convex lens instead of the focussing singlet. The lenses may be coated with an anti-reflection coating and/or a pass-band coating to minimize reflectance at the interfaces between the adjacent lenses and at the ends of the lens assembly.

The optimum depth of field can be adjusted by moving the lens assembly forward or backward in its slidable mounting 21 with respect to the detector. This will modify the focal point on the detector so that it can be fine tuned for a desired scanning height.

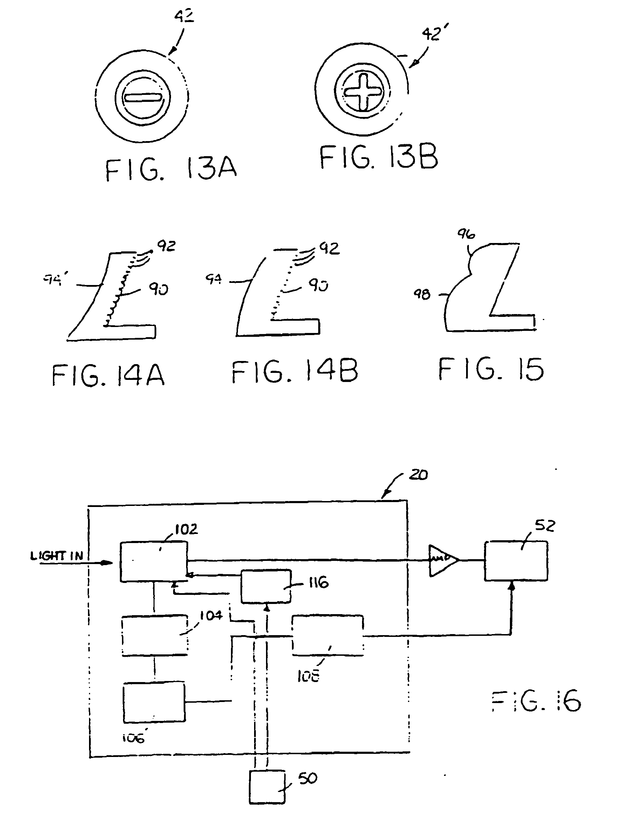

A spatial filter may be included within the optical module, disposed adjacent to or even integral with the lens assembly 18. The spatial filter 42 is an air slit with an orientation and configuration corresponding to the shape of the bar code being scanned. For a one-dimensional bar code, a single slit, illustrated in Figure 13a, is used. The slit is oriented horizontally so that it is parallel to the direction in which the bar code is scanned. For two-dimensional bar codes, a crossed slit pattern is used to provide a two-dimensional spatial filter 42', as shown in Figure 13b. The spatial filter 42 or 42' may be positioned on front of or behind lens 32. The spatial filter 42 or 42' and the bandpass filter 34 may also be formed as a unit, with the slit pattern formed directly on filter 34. Spatial filter 42' may also be used for one-dimensional bar code applications. The horizontal and vertical slits may each have the same dimensions as the single slit, or the dimensions of the vertical and horizontal slits may differ from each other. The light absorber/diffuser 28 is in the form of a funnel having an aperture with its wider end facing towards the detector end of the lens assembly. The funnel allows absorption and concentration of light diffracted from the edges of the lenses. The bandpass filter 34 serves to block any radiation which falls outside of a wavelength range centered around 660 nm (or wavelengths surrounding infrared light for the infrared scanner). For the visible light system, it is particularly desirable to filter the infrared and other visible portions of the light spectrum which may reach the window from the sensing region to provide optimal contrast. This improves resolution of bar codes read at a distance shorter than the depth of field.

The window 24 has a generally "Z"-shaped profile, one leg of which extends in front of the optical assembly 18 and holds or consists of a bandpass filter 25 centered at approximately 660 nm (for the visible light scanner) and a light equalizer/diffuser, and the other leg which holds a cylindrical lens 38, which focuses the light along one axis to form a plane of light, with a line of light being created at its focal point. When the bar code is scanned at the precise focal point of the cylindrical lens 38, the maximum possible light will be reflected to the detector. The function of the window's components is to suppress radiation noise from the LEDs, to form a homogeneous incident beam for illumination of the bar code, to collimate the beam, and to filter the reflected light by removing extraneous light which falls outside of the predetermined acceptable bandwidth range of 660 nm.

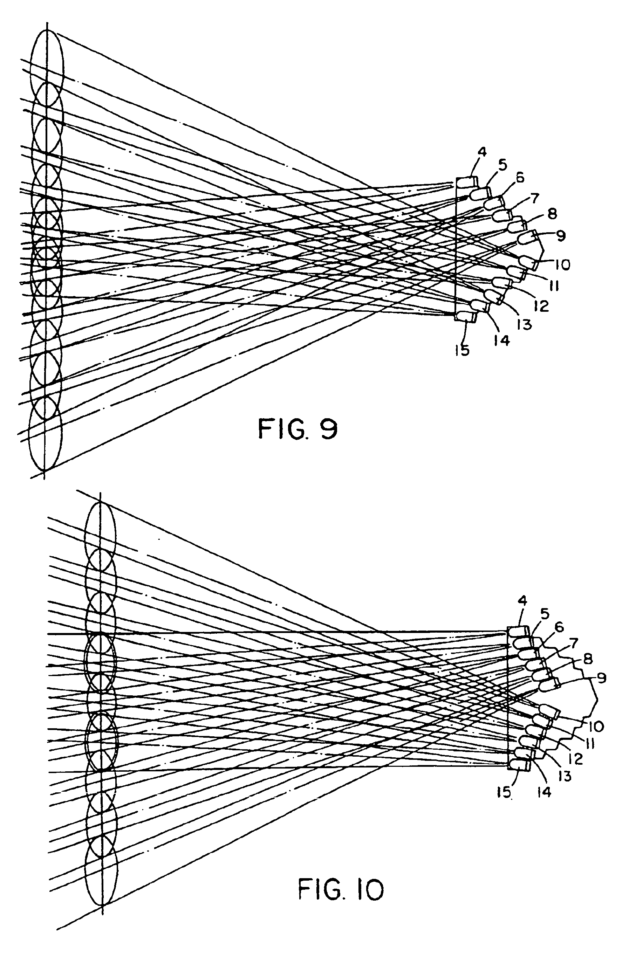

The cylindrical lens 38 may be modified to provide a uniform distribution of light at the focal point. This "homogenization" is provided by knurling or scalloping the input side 90 of the lens, as shown in Figure 14. Each step 92 in the knurled edge 90 acts as a "mini-lens" which spreads the light entering the cylindrical lens at that point. The spread light from each mini-lens overlaps other spread light to homogenize the light at the focal point of the cylindrical lens. The focal point of the cylindrical lens is determined by the outer side 94. Ideally, the placement of the cylindrical lens 38 with respect to the LEDs is determined by the point at which the LEDs combine to produce the most concentrated light. In Figure 9, this point is along line 75.

In conjunction with the knurled input edge, the output edge of the cylindrical lens can be either concave or convex. The concave edge 94' is shown in Figure 14a, and the convex edge 94 is shown in Figure 14b. The concave edge 94 is selected for scans of two-dimensional bar codes at distances from contact to 3 inches. The convex edge 94 is used for scan distances greater than 3 inches.

Another modification of the cylindrical lens is illustrated in Figure 15. The double radius creates, in effect, two separate cylindrical sub-lenses 96 and 98, each with a different focal length. The light emitted by the LEDs will be focussed by both sub-lenses 96 and 98 so that two different lines of focussed light are created at different angles from the lens, as shown in Figure 17. This lens provides greater variability in the distance at which a bar code can be accurately read without requiring a change in the cylindrical lens or a compromise in the strength of the signal.

The detector module 20 consists of an array of charged coupled devices (CCD) which are arranged in equally spaced pixels, and may include additional processing elements which are shown in Figure 16. The spacing of the pixels determines the limit of the resolution of the detector, so it is necessary to match the CCD resolution to the required spatial resolution in the image plane in which the detector lies. The magnification of the lens system should be chosen so that at least 2 CCD pixels cover the minimum bar width to be resolved in the image plane. This is especially important for bar codes printed with a dot matrix printer.

The arrangement of the CCD array will depend on the application. For a one-dimensional bar code, a single linear array of CCDs is acceptable. For two-dimensional bar codes, a single linear array can be used by moving the scanning head from the top to the bottom of the bar code. However, to provide better resolution, two parallel lines of CCDs or a full area array of CCDs can be used. The use of multiple rows of CCDs permits use of an auto-correction technique in which the signal read by one row of CCDs can be double-checked by a second row.

Portions of the double line CCD array or the area array can selectively turned on and off by connecting the CCD module controller to an external trigger or switch which has multiple selections. This will allow a one-dimensional bar code to be read by a two-dimensional scanner, while conserving power by using only as much of the CCD array as needed.

Three types of CCDs, which are known in the art, may be used for the area array of the two-dimensional bar code reader. The first type is the full frame CCD which has a single parallel register for photon exposure, charge integration and charge transport. A shutter is used to control the exposure and to block light from striking the CCD during readout.

The second type, the frame transfer CCD, has a parallel register which is composed of two CCDs that are arranged in tandem. One of these CCD registers is the storage array which is covered with an opaque mask and provides temporary storage for collected charge during readout. The other CCD register, the image array, is identical in capacity to the storage array and is used to collect the image. After the image array is exposed, the electronic image it generates is shifted into the storage array for readout. While the storage array is read, the image array can collect charge for the next image.

The third type of CCD is the interline transfer CCD. This CCD has a parallel register that is subdivided so that the opaque storage register lies between the columns of pixels. The electronic image accumulates in the exposed area of the parallel register. For readout, the entire image is shifted under the interline mask. The CCD shift register also lies below the interline masks. The readout occurs the same as in the frame transfer CCD.

The area array 102, which is included in the CCD module 20 illustrated in Figure 16, operates in an interlaced mode. This mode consists of shifting the potential wells by one-half pixel in alternate fields, "fields" referring to the field of view of the scanning head. This shift is possible due to the multiple phase arrangement of gate structures in the CCD which allows sequential propagation of the collected charges in the potential wells, as is known in the art. This results in two successive fields containing different information, given a certain number of line images with reduced aliasing. During the exposure, or integration, period, charge is accumulated on each pixel in proportion to the incident illumination. Every line includes a certain number of pixels. A transfer pulse will "readout" the charge on each line to generate an analog signal. The combined readouts of each line represent the two-dimensional bar code. The information will be conditioned and stored in memory buffer 88 in order to be decoded by decoder 26. After the transfer has occurred, the area array 102 will return to its integration state to accumulate charge for the next field.

In order to obtain the optimum performance, a calibration of the dark levels and shading correction must be made. A dark frame is stored and subtracted from an image to yield a zero reference.

A shading correction frame, or flat field, is required to make correction for variations in system responsivity. Because the CCD has excellent linearity, only one flat field must be taken to correct an image anywhere within the available dynamic range at a specific wavelength (660 nm). Shading varies with wavelength, and flat fields are often obtained at many wavelengths. A calibration sequence requires taking the image of interest I_{R}, a dark frame, I_{D}, and a flat field, I_{F}. An arithmetic pixel-by-pixel computation yields a corrected image with photometric integrity I_{C} = (I_{R} - I_{D})/(I_{F} - I_{D}).

The drive clock sequencer and synchronization module 106 utilizes a single quartz crystal or external clock to provide all necessary logic and synchronization signals. A TTL/MOS buffer 104, as is known in the art, is included as an interface between the area array 102 and the sequencer module 106.

An anti-blooming device may also be included in the detector module 20. The antiblooming device, which operates on each pixel, consists of a diode that is separated from the photo site by a potential barrier. This potential barrier is controlled by a dedicated gate, clocked by a clock gate control. As a result, the excess charges give rise to a very weak current, so that the efficiency of the anti-blooming device is virtually unlimited.

Other secondary effects that limit the overillumination resistance are: 1) smearing, due to the passage of each column pixel along the overilluminated element during the transfer of the image to the memory; and, 2) carrier diffusion in the substrate, which is linked to the probability of collecting an electron generated under one pixel in the neighboring well. Although this effect is hardly perceptible on a "soft" image, it becomes of significant importance when there is a strongly overilluminated zone, such as might occur when reading in sunlight.

A pixel defect corrector 108 is included in the CCD module to manage pixel defect correction. The pixel defect corrector operates in association with the memory buffer 88. It operates by replacing the signal of the defective pixel or pixels on a line with the signal produced by the last non-defective pixel. This data substitution is carried out through a sample and hold circuit with an inhibiting input, located downstream of the CCD output and before the video signal conditioning and/or processing.

The positions of the defective pixels are mapped in the memory buffer 88 in terms of their relative *x,y* coordinates. These are quantified by the number of lines in the CCD's memory zone and the number of lines of clock pulses at which the defects appear. Likewise, the first defective pixel is picked out relative to the frame synchronization pulse. Defective pixels may be picked out through one or two synchronization pulses and clock pulses.

In the two-dimensional bar code application, the horizontal *x*-axis resolution is much more important than that of the *y*-axis. Therefore, CCD binning can be used in order to significantly increase the depth of filed. Binning is the process of combining charge from adjacent pixels into "superpixels" during readout. Binning improves the signal-to-noise ratio and allows the dynamic range of the CCD to be expanded at the expense of spatial resolution.

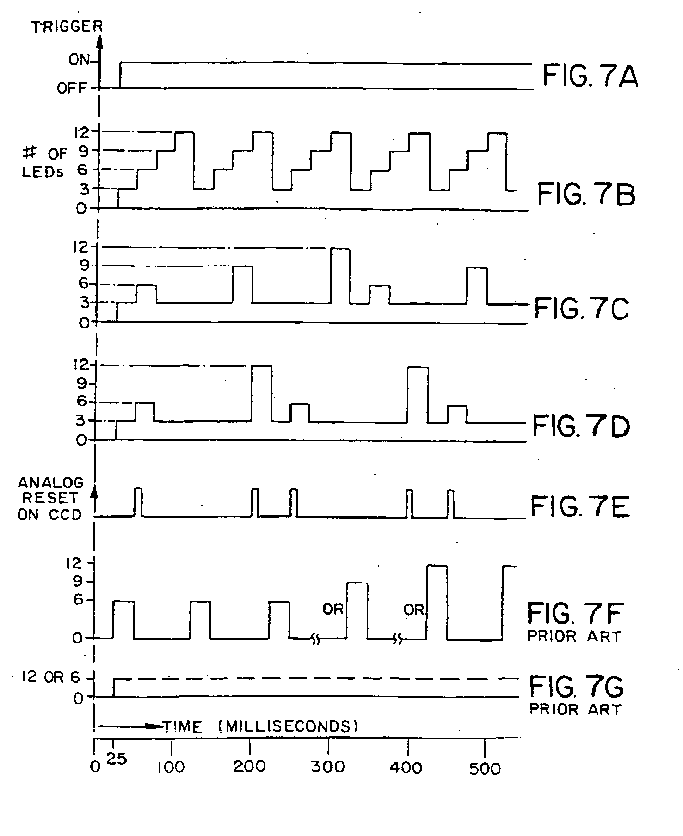

Electrical power is provided to the CCD array by D.C. source or battery 46. In a first embodiment of the invention, the supply of power to the CCD array is coordinated by a clocking signal with the sequential or graduated illumination of the LEDs. Specifically, as seen in Figure 7e, a clock signal (from clock 50) is provided to the CCD array to clear it in coordination with the activation of the LEDs. The CCD array can be scanned at a variable rate, from 36 to 206 scans per second, with the rate being determined by the density of the bar codes being scanned. The scan rate is set by the system clock which then modifies the illumination sequence of the LEDs so that the coordination illustrated in Figures 7a-7e will be maintained. The determination of scan rate can be preprogrammed and can be initiated by scanning a bar code with the scanning rate set-up information, or other relevant information, prior to measurement of the bar codes of interest.

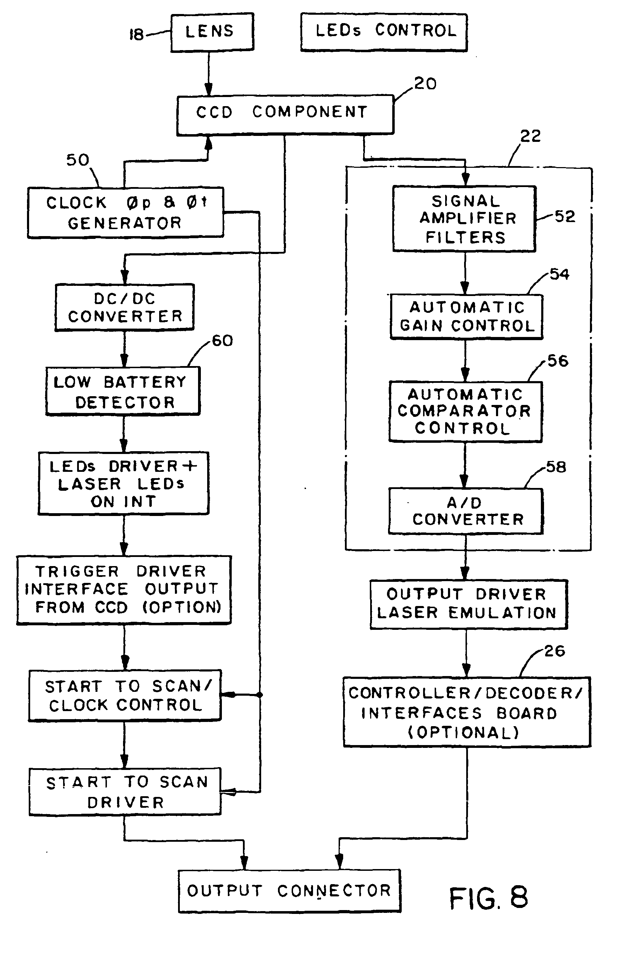

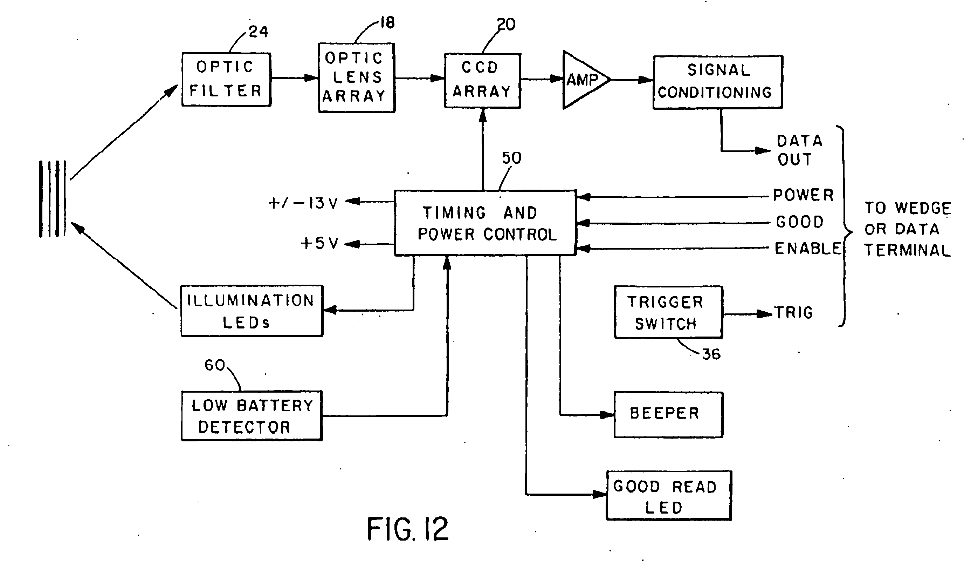

The processing sequences are shown in Figures 8 and 12. For one-dimensional operation (following the first path in Figure 8), the signal provided by the CCD array will be amplified then processed through a low pass two pole filter and a high pass five pole filter (shown combined as filter 52) which will extract the useful signal any noise generated either by the incoming light or by the CCD array itself. An optional automatic gain control (AGC) 54 will adjust the level of the signal to a pre-determined level. The level of the signal entering the AGC is a function of the distance at which the bar code is scanned. The greater the distance that the scanner is held above the scanned code, the weaker the signal will be. A filtered signal will then provide a voltage to a circuit which determines the real time center point ("zero crossing") reference level to a comparator which will convert the analog video output signal to a digital signal representing the bar code. The use of an automatic comparator control (ACC) 56 will avoid noise generated by hysteresis and will avoid missing the white guard and the first commutation which represents the first bar in the video signal. The signal is then converted from analog to digital by A/D converter 58 and sent to decoder 26. (Decoder 26 is shown as "optional" because it can be combined with, or external to, the optical scanning head.)

In the two-dimensional scanner, the output of the CCD component is directed through signal converter 22'. Here, the signal is amplified and filtered, as in the one-dimensional path, by filter 52'. Filter 52' may be a fixed or programmable multi-pole active amplifier filter. When a bar code is scanned, the waveform produced has a rounded form with a continuously varying component due to the crisp alternating black and white bars, with the amplitude being an indication of the pulse width. In order to magnify the amplitude according to the width of the bars and spaces, filter 52', which is a bandpass filter (active), will magnify the low amplitude portion of the signal and will maintain the high amplitude portion at the same level. The "transfer function" of filter 52' is shown in Figure 21. The segments "BC" and "CD" indicate the magnification according to the high frequency (low level) or the small black and white bars to be magnified. The "AB" segment corresponds to the large black and white bars to be maintained at the same amplitude. The slopes of segments "FA", "BC", "CD" or "EG" may be varied in order to adjust the relative magnitude of the narrow black and white barwidths with the wide bars. This filtering may be achieved by a fixed filter, an automatic filter, or by a programmable, menu driven function.

Gain control 54', which may be automatic, edge detection or highly adaptive thresholding (described below) is provided to adjust the magnitude of the received signal to a pre-determined level, regardless of the distance between the bar code and the scanner and the ambient illumination. (These techniques may also be used in the one-dimensional scanner.) Dark reference 55 provides the means by which the calibration can be made to correct for variations in system responsivity. Comparator and threshold control 56' may include highly adaptive thresholding to recover the accurate form of the bar code signal with elimination of the convolution distortion.

Convolution distortion refers to the averaging of the signal due to the finite size of the CCD's resolution and the delays in the electronic circuits. The distortion results in a rounding of the slope of the signal, causing significant error. The adaptive thresholding method consists of following the slope of the signal and switching the digital output level of the final shape of the comparator into the one level on the rising slope of the analog signal and into the zero level on the descending slope of the analog signal, using the zero crossing of the analog signal (average value) as the reference level.

A video signal processing module, as is known in the art, may also be used to process the analog signal to provide a digital output data stream and/or to decode and provide a signal representing the decoded information within a two-dimensional bar code.

In an alternate embodiment, rather than sequentially illuminating the LEDs, the voltage to the LEDs is regulated in response to the signal level in the detector. The stronger the received signal, the lower the intensity of light required from the LEDs. The strength of the signal is dependent upon the distance between the scanner and the bar code, so, at the maximum scanning distance, the LEDs will receive full power. This conserves power by only demanding the power that is necessary. It also avoids saturating or distorting the detected signal if the bar code is read at a short distance from the scanner with high intensity light.

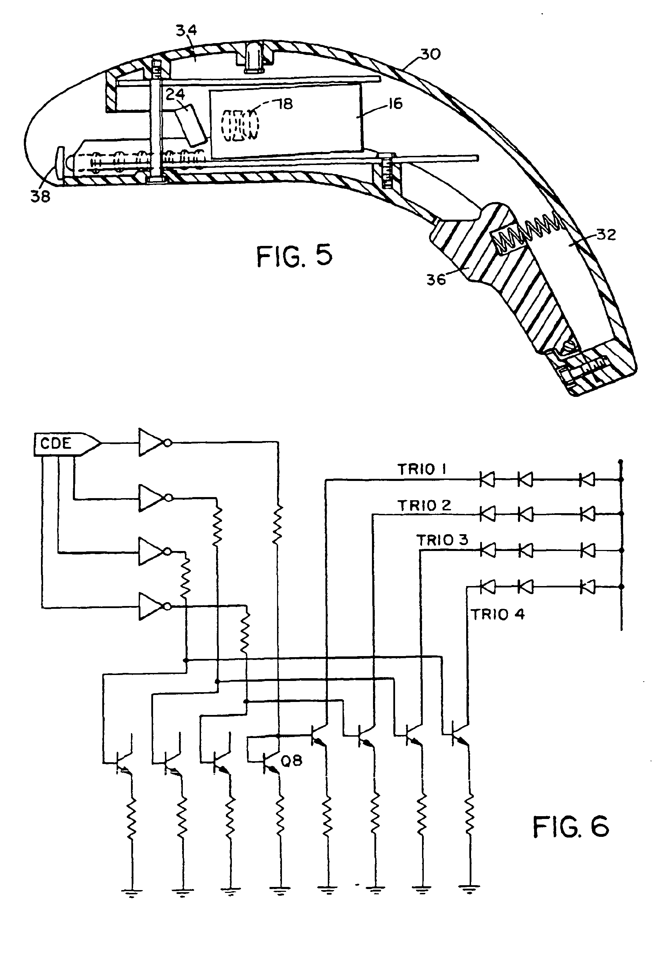

The optical scanning head of the present invention provides for conservation of power supply energy by using a system clock to control a scanned, progressive illumination of the LEDs in coordination with clearing of the CCD array. The circuit diagram in Figure 6 is provided to illustrate the sequential control of the four different LED trios which are illustrated in the embodiment of Figure 1. For example, the clock driver provides a signal to activate amplifier U2A which then provides a signal to the first trio, identified as TRIO 1, to illuminate LEDs 5, 6 and 12. TRIO 1 is connected so that it will be on at all times that the scanner is activated, regardless of which other trios are on (note the base-collector short at transistor Q8).

Figure 7 provides samples of pulse patterns for activation of the LEDs of the embodiment illustrated in Figure 1. Figure 7a illustrates the activation of the scanner at the beginning of a first clock pulse, i.e., the power is turned on. According to the pulse pattern illustrated in Figure 7b upon application of the "turn on" signal, first trio of LEDs (TRIO 1) is illuminated. At the beginning of the second clock cycle a second trio (TRIO 2) is illuminated. Also at this time, a signal is provided to the CCD array to reset it to initiate its detection function, shown in Figure 7e. At the beginning of the third clock cycle a third trio of LEDs (TRIO 3) turns on, and during a fourth clock cycle a fourth set of LEDs (TRIO 4) turns on. During the fifth clock cycle TRIO 2, TRIO 3 and TRIO 4 turn off and only TRIO remains on. This step up/drop down sequence is continued until the trigger is turned off at the point illustrated in Figure 7a. In Figure 7c a second possible pulse pattern is illustrated in which the first trio of LEDs turns on during the first clock cycle and a second LED trio turns on the second clock cycle, then turns off in the third clock cycle so that the first trio remains on until the seventh clock cycle when the second and third trios turn on for a single clock cycle. The first trio of LEDs remains on during the entire procedure and in the twelfth clock cycle, all four trios of LEDs turn on for one cycle. After a single clock cycle, where only the first set of LEDs remain on, the sequence repeats. In Figure 7d the pulse pattern alternates between two trios of LEDs being on and turning on four trios of LEDs, with one trio being on at all times. For comparison of the inventive method to prior art practices, Figures 7f and 7g are provided. In Figure 7f, a simple alternation occurs between on and off. In Figure 7g, any combination of the LEDs remains on at all, times that the trigger is activated.

In an alternate embodiment, power conservation is achieved by regulating the voltage supplied to the LEDs in response to the level of the signal generated by the detector array. As above, the detector signal level is dependent upon the distance at which the bar code is scanned. For greater distances, the signal level will be lower. In response to this lower signal, the voltage supplied to the LEDs will be increased. When the signal level is above a pre-determined limit, the voltage supplied to the LEDs will be less, since less light is needed to provide an acceptable signal. As an example, if the bar code is read at close range, the LEDs will be supplied with a 25% of the maximum current drain, which, in the prototype device, is 5mA. If the bar code is read within the middle of the total field depth, the LEDs receive 50%, or 10mA. At the outer limits of the field depth, the supplied current will be 20 mA. The percentage of power applied to the LEDs may change with the color of the bar code as needed to obtain the optimal light intensity for scanning. This power management technique will use the level of the video output signal to command and control the current on the LEDs through an appropriate clocking function

The light path of the incident beam at the front region of the scanner will generate a beam of light through angular distance over a field of view across the bar code symbol located in the vicinity of the reference plane. The width of the light transmissive window 24 represents a limiting factor for the width of the incident beam. For this reason, the LEDs are mounted as close as possible to the window 24 to optimize the field of view and the incident beam power. Despite this limitation, the field of view of the incident beam is generally independent of the width of the PCB 2 or of the housing. This permits the field of view, i.e., the transverse beam dimension of the incident beam to be larger than the width of the window 24. This is due to the fact that the LEDs emit the incident beam at different directions from each side of the device within the scanning head. The LEDs are oriented to provide parallel beams in pairs. For example, a first pair of LEDs, LEDs 4 and 7 are oriented at a 7.5° angle on the y-axis(a line normal to the front of the PCB 2), 5 and 8 are oriented at 15°, and LEDs 6 and 7 are oriented at 22.5°, as illustrated in Figure 9. The LEDs on the other leg of the "V" are similarly oriented in the opposite direction. As can be seen in the figure, the fan of light which results from this orientation provides an intensity distribution which is higher within a narrow region at the center of the fan, as determined at a distance of 7 inches from the scanner.

The alternate LED arrangement shown in Figure 10 places the centermost LEDs at an angle of 3.75 degrees from a line normal to the front of the scanner, with the other LEDs being oriented at 3.75 degree increments as they progress outward along the legs of the "V". This LED configuration results in a slightly wider region of higher intensity as compared to the above-described embodiment. It should be noted that the cylindrical lens 38 should be positioned at a distance from the LEDs corresponding to the location where the beams cross to provide the highest intensity,e.g., location 120 in Figure 10.

A third configuration of the LEDs is illustrated in Figure 11, which shows a line of LEDs at varying orientations. This configuration is described above.

Other electrical sub circuits can also be provided on PCB 2, including the analog filter 50 and A/D converter 52. However, in order to configure the housing of the scanner in desired position, it may be necessary to provide a second circuit board oriented at some angle to the first circuit board onto which additional subcircuits can be placed including a decoder chip and a memory device. For example, two or more circuit boards can be configured so that one abuts another at approximate right angles to create an "L"-shaped or "U"-shaped arrangement. This arrangement would allow placement of one of the boards in the barrel of a scanning gun with the other board extending partially into the handle portion.

The decoder module 26 may be either inside or outside of the scanning head housing and will process the digitalized signal generated in the scanning head to calculate the desired data, e.g., the multiple digit representation or code represented by the bar code symbol in accordance with the algorithm contained in the software program. The decoder module includes a random access memory (RAM) for temporary data storage, and EPROM or PAL for holding the control program and a microprocessor which controls the RAM and EPROM or PAL. The decoder module will also include circuitry for controlling the scanning head and the communication circuitry for communication with different functions of the scanning head or with a host system to which the scanning head can be connected, such as a hand held terminal data screen personal computer for computer network.

A low battery detector 60 with indicator LED 61 is included in the housing to provide an indication of insufficient power for further scans. This will provide advance warning so that the user will be aware of the problem before having scanned a number of items without realizing that the items cannot register properly due to the insufficient power.

An electronic shutter 116, shown in Figure 16, is activated by the clock signal from clock 50 to periodically prevent the integration of charge from the light impinging upon the detector 20. This creates "snapshots" of the bar code image to preserve the integrity of the bar code pattern signal as one of the scanning head and the bar code is in motion with respect to the other.

The circuitry, with or without the power supply of a portable configuration, of the optical scanner is protected within a housing 30 which is contoured to easily fit into the user's hand. The user will grip the housing 30 by its handle portion 32, illustrated in Figures 4 and 5, with the window portion 34 aimed at the bar code symbol to be read. The trigger 36 is built within the handle 32 for easy, one-handed operation of the scanner, with the trigger being positioned at a short distance from the user's fingers so that activation is simply a matter of depressing the trigger. A dual trigger, multi-position trigger or additional switch, is provided for selecting between one-dimensional and two-dimensional scanning, so that only as much power is used as is necessary to assure a high quality signal. The window portion can be placed anywhere from 0 to 22 inches above or in front of the bar code to be scanned. With a scanning distance of less than seven inches, it is desirable to center the fan of light over the bar code since different intensities due to the sequential limitation of the LEDs may illuminate some portions of the bar code more brightly than others, and due to the higher density of light at the center of the fan. For scans greater than 22 inches, not in accordance with the invention the LEDs can be replaced with e flash lamp.

The optical scanning head of the present invention provides a device for building a small or self-contained portable device, a portable component of a multi-component Scanner, or the optical portion of a built-in scanning unit, for bar code scanning which uses LED and CCD technology making it an economical device. The scanning head is capable of reading bar codes up to 22 inches away from the detector with LED illumination so that it is versatile for either portable or fixed implementation. The variably pulsed activation of the LEDs and CCD array, or the graduated illumination of the LEDs, makes the device capable of operating at low power with minimal power drain during illumination, a significant factor in portable scanners. The lens system and fan of light produced by the LED array permit the reading of wide range of bar code densities and widths. For point-of-sale use, or industrial applications, where the scanner is fixed and the object imprinted with the bar code is moved past it, a number of optical scanning heads of the present invention can be used ih combination and mounted at different angles so that, regardless of the orientation or position of the bar code, the bar code can be read. For example, a crossed or starburst pattern can be made by combining two or four scanning heads, respectively. The signal generated by each individual scanning head will be compared with signals from the other scanning heads, and the signal with the least error will be used. The signals from each scanning head may also be used to double check the signals provided by other scanning heads.

Another combination into which the optical scanning head of the present invention can be incorporated is in a "touchless" bar code "tunnel", which consists of mounting on each side of a rectangular pass-through tunnel with one or more scanning heads built into each wall of the tunnel, i.e., the top and two sides. The tunnel may be, but is not necessarily, included in a conveyer belt system used in point-of-sale or industrial applications. The result is that, regardless of the position or the side of the object on which the bar code is printed, at least one of the optical scanners will be able to read the bar code, either one- or two-dimensional, automatically and transmit the decoded data to the computer or cash register. This method will simplify handling and will reduce "check-out" time of the items. Such a capability would be highly advantageous in a grocery check-out situation.

The above description and drawings are therefore intended to be exemplary only and the scope of the invention is to be limited solely by the appended claims.

## Claims

1. An optical scanner for scanning a bar code symbol at a variable, non-contact distance from said optical scanner, said optical scanner having a first width and comprising at least one printed circuit board (2) having a front, a centre and a rear, a longitudinal centre plane perpendicularly bisecting said at least one printed circuit board (2) into a first side and a second side are running perpendicular to the front of the PCB said front having a second width smaller than the first width, a plurality of LEDs (4-15) disposed on the front of the at least one printed circuit board (2) for emitting an incident beam in the form of a fan of light (104-115) for illuminating the bar code symbol, an optical assembly (18) disposed at the centre of the at least one printed circuit board (2) for focussing light reflected from the bar code symbol; a detector means (20) comprising at least one linear CCD array disposed at the rear of the at least one printed circuit board (2) for detecting light focussed by the optical assembly (18) and generating an electrical signal representative of said bar code symbol therefrom, a signal processing means (22) in electrical communication with the COD detector means (20) for converting the electrical signal into an output comprising data descriptive of the bar code symbol, a voltage source (46) for providing voltage to the plurality of LEDs (4-15), the CCD detector means (20) and the signal processing means (22), the optical scanner having a single cylindrical lens provided forward of said plurality of LEDs having an input edge and an output edge for focussing said fan of light from said plurality of LED's into a line of light at its focal distance for illuminating a bar code within a field of view within a range of said focal distance so that reflected light is reflected therefrom, wherein a first portion (4; 5; 6; 7; 8; 9) of the plurality of LEDs (4-15) is disposed on the first side and a second portion (10; 11; 12; 13; 14; 15) of the plurality of LEDs (4-15) is disposed an the second side, wherein all the LED's of the first portion (4-9) are orientated at same non-zero angles in a first direction with respect to the longitudinal centre plane and all the LED's of the second portion (10-15) are similarly orientated at same non-zero angles in a second opposite direction with respect to the longitudinal centre plaine so as to emit light and to create a diverging incident beam that increases in width as a distance between the optical scanner and the bar code increases.

2. The optical scanner of Claim 1, wherein each LED of the plurality of LEDs (4-15) emits light having a wavelength of 660 nm.

3. The optical scanner of Claim 1, further comprising a light-transmissive window (24) disposed adjacent the front of the at least one printed circuit board (2) in front of the plurality of LEDs (4-15).

4. The optical scanner of Claim 3, wherein the light-transmissive window (24) includes the cylindrical lens (38) for focusing the incident beam of light into a line of light at the bar code symbol.

5. The optical scanner of Claim 1, wherein the optical assembly (18) comprises a combination of lenses (32;36;40) and filters (28;34;42).

6. The optical scanner of Claim 1, further comprising a dark room (16) for blocking stray light from the optical assembly (18).

7. The optical scanner of Claim 1, further comprising a housing (30) for retaining components of the optical scanner, the housing (30) configured to be held in a user's hand, the housing (30) having an opening adjacent the front end of the at least one printed circuit board (2), wherein the incident beam of light (104-115) for illuminating the bar code symbol exits the housing (30) through the opening.

8. The optical scanner of Claim 7, further comprising a trigger (36) for activating and de-activating the optical scanner.

9. The optical scanner of Claim 1, wherein the signal processing means (22) includes a clocking device (50) for controlling a timing of scanning by the detector means (20) and transfer of the electrical signal from the detector means (20) to the signal processing means (22).

10. The optical scanner of claim 7, wherein the optical scanner is held at a distance from the bar code symbol and has a beam width at least as wide as the first width at a point at which the diverging incident beam contacts the bar code symbol.

11. The optical scanner of Claim 3, wherein the light-transmissive window (24) includes means for homogenizing the diverging incident beam.

12. The optical scanner of Claim 1, wherein the plurality of LEDs (4-15) on the first side and the second side are arranged in a "V"-like shape so that a first half of the incident beam (104-115) emitted by the first portion of LEDs (4;5;6;7;8;9) intersects a second half of the incident beam (104-115) emitted by the second portion of LEDs (10;11;12;13;14;15).

13. The optical scanner of Claim 1, wherein the plurality of LEDs (4-15) are arranged in a line at varying orientations, said varying orientation providing a means for diverging said incident beam of light.

## Patentansprüche

1. Optischer Abtaster zum Abtasten eines Strichcodesymbols in einem variablen kontaktfreien Abstand von dem optischen Abtaster, welcher optische Abtaster eine erste Breite hat und wenigstens eine gedruckte Schaltungsplatte (2) mit einer Vorderseite, einer Mitte und einer Rückseite umfasst, wobei eine in Längsrichtung verlaufende Mittelebene die wenigstens eine gedruckte Schaltungsplatte (2) senkrecht in eine erste Seite und eine zweite Seite unterteilt und senkrecht zur Vorderseite der gedruckten Schaltungsplatte verläuft und wobei die Vorderseite eine zweite Breite hat, die kleiner als die erste Breite ist, mit einer Vielzahl von Leuchtdioden (4-15), die an der Vorderseite der wenigstens einen gedruckten Schaltungsplatte (2) angeordnet sind, um einen einfallenden Lichtstrahl (104-115) zum Beleuchten des Strichcodesymbols auszugeben, mit einer optischen Anordnung (18), die an der Mitte der wenigstens einen gedruckten Schaltungsplatte (2) angeordnet ist, um das vom Strichcodesymbol reflektierte Licht zu fokussieren, mit einer Detektoreinrichtung (20), die wenigstens eine lineare CCD-Anordnung umfasst, die an der Rückseite der wenigstens einen gedruckten Schaltungsplatte (2) angeordnet ist, um das von der optischen Anordnung (18) fokussierte Licht zu erfassen und daraus ein elektrisches Signal zu erzeugen, das das Strichcodesymbol wiedergibt, mit einer Signalverarbeitungseinrichtung (22) in elektrischer Verbindung zur CCD-Detektoreinrichtung (20), um das elektrische Signal in ein Ausgangssignal umzuwandeln, das Daten umfasst, die das Strichcodesymbol beschreiben, und mit einer Spannungsquelle (46), die eine Spannung der Vielzahl von Leuchtdioden (4-15), der CCD-Detektoreinrichtung (20) und der Signalverarbeitungseinrichtung (22) liefert, welcher optische Abtaster eine einzige zylindrische Linse aufweist, die vor der Vielzahl von Leuchtdioden angeordnet ist und einen Eingangsrand und einen Ausgangsrand aufweist, um das fächerförmige Lichtbündel von der Vielzahl von Leuchtdioden in einen linearen Lichtstrom am Brennpunkt umzuwandeln, um den Strichcode in einem Blickfeld im Bereich des Brennpunktabstandes zu beleuchten, so dass reflektiertes Licht davon reflektiert wird, wobei ein erster Teil (4; 5; 6; 7; 8; 9) der Vielzahl von Leuchtdioden (4-15) auf der ersten Seite und ein zweiter Teil (10; 11; 12; 13; 14; 15) der Vielzahl von Leuchtdioden (4-15) auf der zweiten Seite angeordnet ist, wobei alle Leuchtdioden des ersten Teils (4-9) unter denselben Winkeln ungleich 0 in einer ersten Richtung bezüglich der in Längsrichtung verlaufenden Mittelebene ausgerichtet sind und alle Leuchtdioden des zweiten Teils (10-15) in ähnlicher Weise unter gleichen Winkeln ungleich 0 in einer zweiten entgegengesetzten Richtung bezüglich der in Längsrichtung verlaufenden Mittelebene ausgerichtet sind, so dass sie Licht aussenden und einen divergierenden einfallenden Lichtstrahl erzeugen, der in seiner Breite mit zunehmendem Abstand zwischen dem optischen Abtaster und dem Strichcode zunimmt.

2. Optischer Abtaster nach Anspruch 1, bei dem jede Leuchtdiode der Vielzahl von Leuchtdioden (4-15) Licht mit einer Wellenlänge von 660 nm aussendet.

3. Optischer Abtaster nach Anspruch 1, welcher weiterhin ein lichtdurchlässiges Fenster (24) umfasst, das neben der Vorderseite der wenigstens einen gedruckten Schaltungsplatte (2) vor der Vielzahl der Leuchtdioden (4-15) angeordnet ist.

4. Optischer Abtaster nach Anspruch 3, bei dem das lichtdurchlässige Fenster (24) die zylindrische Linse (38) zum Fokussieren des einfallenden Lichtstrahls zu einem linearen Lichtbündel am Strichcodesymbol einschließt.

5. Optischer Abtaster nach Anspruch 1, bei dem die optische Anordnung (18) eine Kombination von Linsen (32; 36; 40) und Filtern (28; 34; 42) umfasst.

6. Optischer Abtaster nach Anspruch 1, welcher weiterhin eine Dunkelkammer (16) zum Blockieren von Streülicht von der optischen Anordnung (18) umfasst.

7. Optischer Abtaster nach Anspruch 1, welcher weiterhin ein Gehäuse (30) zum Halten der Bauteile des optischen Abtasters aufweist, welches Gehäuse (30) so ausgebildet ist, dass es in der Hand eines Benutzer gehalten werden kann, und welches Gehäuse (30) eine Öffnung neben dem vorderen Ende der wenigstens einen gedruckten Schaltungsplatte (2) aufweist, wobei der einfallende Lichtstrahl (104-115) zum Beleuchten des Strichcodesymbols aus dem Gehäuse (30) durch die Öffnung austritt.

8. Optischer Abtaster nach Anspruch 7, welcher weiterhin einen Auslöser (36) zum Aktivieren und Deaktivieren des optischen Abtasters umfasst.

9. Optischer Abtaster nach Anspruch 1, bei dem die Signalverarbeitungseinrichtung (22) eine Takteinrichtung (50) zur zeitlichen Steuerung der Abtastung durch die Detektoreneinrichtung (20) und der Übertragung eines elektrischen Signals von der Detektoreneinrichtung (20) zur Signalverarbeitungseinrichtung (22) aufweist.

10. Optischer Abtaster nach Anspruch 7, wobei der optische Abtaster in einem Abstand vom Strichcodesymbol gehalten ist und eine Strahlbreite aufweist, die wenigstens so groß wie die erste Breite an einer Stelle ist, an der der divergierende einfallende Strahl das Strichcodesymbol kontaktiert.

11. Optischer Abtaster nach Anspruch 3, bei dem das lichtdurchlässige Fenster (24) eine Einrichtung zum Homogenisieren des divergierenden einfallenden Strahls aufweist.

12. Optischer Abtaster nach Anspruch 1, bei dem die Vielzahl von Leuchtdioden (4-15) auf der ersten Seite und der zweiten Seite V-förmig angeordnet ist, derart, dass eine erste Hälfte des einfallenden Strahls (104-115), die vom ersten Teil der Leuchtdioden (4; 5; 6; 7; 8; 9) ausgesandt wird, eine zweite Hälfte des einfallenden Strahls (104-115) schneidet, die vom zweiten Teil der Leuchtdioden (10; 11; 12; 13; 14; 15) ausgesandt wird.

13. Optischer Abtaster nach Anspruch 1, bei dem die Vielzahl von Leuchtdioden (4-15) in einer Linie unter variierenden Ausrichtungen angeordnet ist, welche variierenden Ausrichtungen eine Einrichtung zum Divergieren des einfallenden Lichtstrahles liefern.

## Revendications

1. Lecteur optique pour analyser un symbole en code à barres à une distance variable, sans contact, dudit lecteur optique, ledit lecteur optique ayant une première largeur et comprenant au moins une carte de circuit imprimé (2) ayant un avant, un centre, un arrière et un plan central longitudinal coupant perpendiculairement ladite au moins une carte de circuit imprimé (2) en un premier côté et un second côté et orienté perpendiculairement par rapport à l'avant de la carte de circuit imprimé, ledit avant ayant une deuxième largeur plus petite que la première largeur, une pluralité de DEL (4-15) disposées sur l'avant de l'au moins une carte de circuit imprimé (2) pour émettre un faisceau incident sous forme d'un pinceau de lumière (104-115) pour éclairer le symbole en code à barres, un ensemble optique (18) disposé au centre de l'au moins une carte de circuit imprimé (2) pour focaliser la lumière réfléchie par le symbole en code à barres, des moyens de détection (20) comprenant au moins une rangée linéaire de dispositifs à couplage de charge DCC disposée à l'arrière de l'au moins une carte de circuit imprimé (2) pour détecter la lumière focalisée par l'ensemble optique (18) et générer un signal électrique représentatif dudit symbole en code à barres à partir de ce dernier, des moyens de traitement de signal (22) en communication électrique avec les moyens détecteurs DCC (20) pour convertir le signal électrique en une sortie de données descriptives du symbole en code à barres, une source de tension (46) pour fournir une tension à la pluralité des DEL (4-15), aux moyens détecteurs DCC (20) et aux moyens de traitement du signal (22), le lecteur optique ayant une lentille cylindrique unique disposée en avant de la pluralité des DEL ayant un bord d'entrée et un bord de sortie pour focaliser ledit faisceau de lumière de la pluralité desdites DEL en une ligne de lumière à sa distance focale pour éclairer un code à barres dans un champ de vision dans une plage de ladite distance focale de façon qu'une lumière réfléchie en soit réfléchie, dans lequel une première portion (4, 5, 6, 7, 8, 9) de la pluralité de DEL (4-15) est disposée sur le premier côté et une seconde portion (10, 11, 12, 13, 14, 15) de la pluralité de DEL (4-15) est disposée sur le second côté toutes les DEL de la première portion (4-9) étant orientées selon des angles non nuls par rapport au plan central longitudinal et toutes les DEL de la seconde portion (10-15) étant semblablement orientées selon des angles non nuls dans une seconde direction, opposée par rapport au plan central longitudinal de façon à émettre de la lumière et à créer un faisceau incident divergent qui augmente de largeur à mesure que la distance augmente entre le lecteur optique et le code à barres.

2. Lecteur optique selon la revendication 1, dans lequel chaque DEL de la pluralité de DEL (4-15) émet une lumière ayant une longueur d'onde de 660 nm.

3. Lecteur optique selon la revendication 1, comprenant en outre une fenêtre transmettant la lumière (24) disposée au voisinage de l'avant de l'au moins une carte de circuit imprimé (2) devant la pluralité de DEL (4-15).

4. Lecteur optique selon la revendication 3, dans laquelle la fenêtre transmettant la lumière (24) comporte la lentille cylindrique (38) pour focaliser le faisceau incident de lumière en une ligne de lumière au niveau du symbole de code à barres.

5. Lecteur optique selon la revendication 1, dans laquelle l'ensemble optique (18) comprend une combinaison de lentilles (32, 36, 40) et de filtres (28, 34, 42).

6. Lecteur optique selon la revendication 1, comprenant en outre une chambre noire (16) pour bloquer la lumière parasite en provenance de l'ensemble optique (18).

7. Lecteur optique selon la revendication 1, comprenant en outre un logement (30) pour contenir les composants du lecteur optique, le logement (30) étant conformé pour pouvoir être tenu dans la main de l'utilisateur, le logement (30) ayant une ouverture au voisinage de l'extrémité avant de l'au moins une carte de circuit imprimé (2), le faisceau de lumière incidente (104-115) pour éclairer le symbole en code à barres quittant le logement (30) par cette ouverture.

8. Lecteur optique selon la revendication 7, comprenant en outre une gâchette (36) pour activer et désactiver le lecteur optique.

9. Lecteur optique selon la revendication 1, dans lequel les moyens de traitement de signal (22) incluent un dispositif d'horloge (50) pour contrôler une temporisation de balayage par les moyens de détection (20) et le transfert du signal électrique des moyens de détecteur (20) vers les moyens de traitement de signal (22).

10. Lecteur optique selon la revendication 7, dans lequel le lecteur optique est maintenu à une certaine distance du symbole en code à barres et a une largeur de faisceau au moins aussi large que la première largeur en un point où le faisceau incident divergent vient au contact du symbole en code à barres.

11. Lecteur optique selon la revendication 3, dans lequel la fenêtre transmettant la lumière (24) inclut des moyens pour homogénéiser le faisceau incident divergent.

12. Lecteur optique selon la revendication 1, dans lequel la pluralité de DEL (4-15) sur le premier côté et le second côté sont disposées en forme de V de façon qu'une première moitié du faisceau incident (104-115) émise par la première partie des DEL (4, 5, 6, 7, 8, 9) coupe une seconde moitié du faisceau incident (104-115) émise par la seconde partie des DEL (10, 11, 12, 13, 14, 15).

13. Lecteur optique selon la revendication 1, dans lequel la pluralité de DEL (4-15) est disposée en ligne selon diverses orientations, lesdites diverses orientations fournissant le moyen de faire diverger ledit faisceau incident de lumière.
